# FASCICULE DE BREVET EUROPEEN

(11) **EP 0 734 743 B1**
(45) Date de publication et mention de la délivrance du brevet: **06.12.2000**
(21) Numéro de dépôt: 96410020.0
(22) Date de dépôt: 12.03.1996
(51) Int. Cl.: A62B 1/14, A62B 35/04

(54) **Organe d'absorption d'énergie associé à une longe d'assurance**
Energieabsorbierende Einrichtung in Verbindung mit einer Sicherheitslinie
Energy absorbing device associated with a safety line

(30) Priorité: 27.03.1995 FR 9503778
(43) Date de publication de la demande: 02.10.1996
(73) Titulaire: ZEDEL, F-38920 Crolles (FR)
(72) Inventeur: Hede, Jean Marc, 38700 La Tronche (FR); Petzl, Paul, 38530 Barraux (FR)
(74) Mandataire: Hecké, Gérard

(56) Documents cités:
- CH-A- 678 152
- FR-A- 2 694 044
- FR-A- 2 701 402
- FR-A- 2 706 314
- GB-A- 691 736
- US-A- 4 667 772
- US-A- 4 774 742

## Description

L'invention est relative à un organe d'absorption d'énergie associé à une longe en corde d'assurance, et comprenant un corps équipé de moyens de passage de la corde pour engendrer un effort de retenue dû à la friction de la corde lors de son glissement sur le corps.

La fonction principale d'un tel appareil consiste à limiter l'effort exercé sur la corde lors de l'arrêt d'une masse en mouvement, notamment en cas de chute d'un grimpeur. Les appareils connus sont généralement constitués par une simple plaque métallique percée par plusieurs trous circulaires pour le passage de la corde, de manière à former un entrelacement de plusieurs spires élémentaires. Le diamètre de chaque trou correspond sensiblement à celui de la corde. La mise en place de la corde sur le corps de l'appareil est compliqué, car elle nécessite au moins cinq ou six passages de la corde à travers les trous pour obtenir un effort de retenue suffisant.

L'objet de l'invention consiste à réaliser un organe d'absorption d'énergie fiable, notamment pour une longe d'assurance facilement opérationnelle, indépendamment du mode d'utilisation sur une corde fixe ou une main courante.

L'organe d'absorption d'énergie selon l'invention est caractérisé en ce que les moyens de passage de la corde de section cylindrique comportent un premier orifice autorisant le croisement sans jeu de deux brins de corde, et un deuxième orifice conformé selon un V renversé à section dégressive en direction du premier orifice, ledit second orifice ayant une portion rétrécie de dimension inférieure au diamètre de la corde, et deux arêtes convergentes de centrage de la corde lors du resserrage de la spire pendant ledit glissement.

Selon une caractéristique de l'invention, le premier orifice présente une configuration sensiblement ellipsoïdale, et la distance la plus grande du premier orifice correspond sensiblement au double du diamètre de la corde.

L'axe médian de symétrie du corps passe par le fond du deuxième orifice, et par le centre du premier orifice.

L'effet de coincement de la corde d'assurance dans le V du deuxième orifice, et le croisement des brins de corde dans le premier orifice permettent d'obtenir un freinage optimum avec une seule spire à autoserrage.

Selon un mode de réalisation préférentiel, l'organe d'absorption d'énergie est intégré dans une longe d'assurance ayant deux brins de corde, et deux boucles d'attache. Chaque boucle d'attache comporte des moyens de butées venant en engagement contre le corps en fin de course de glissement de la corde.

D'autres avantages et caractéristiques ressortiront plus clairement de la description qui va suivre d'un mode de réalisation de l'invention, donné à titre d'exemple non limitratif, et représenté aux dessins annexés, dans lesquels:
- la figure 1 est une vue schématique de profil d'une longe d'assurance équipée de l'organe d'absorption d'énergie selon l'invention;
- La figure 2 montre une vue en élévation à échelle agrandie, de l'organe d'absorption d'énergie de la figure 1;
- La figure 3 représente une vue en coupe de l'organe d'absorption d'énergie de la figure 1, avant la mise sous tension de la corde d'assurance;
- La figure 4 est une vue en coupe selon la ligne 4-4 de la figure 3;

Les figures 5 et 6 sont des vues identiques aux figures 3 et 4, après mise sous tension de la corde d'assurance;
La figure 7 est une vue identique à la figure 5, et montre la longe en fin de glissement après absorption d'une fraction de l'énergie de chute;
La figure 8 montre l'extrémité d'une boucle d'attache associée à un manchon de protection;
La figure 9 est une vue en plan de la figure 8, après mise en place d'un mousqueton;
Les figures 10 et 11 représentent une première application de la longe d'assurance à une main courante, respectivement avant et pendant la chute du grimpeur;
Les figures 12 et 13 montrent une deuxième application de la longe d'assurance à une corde fixe, respectivement avant et après la chute du grimpeur.

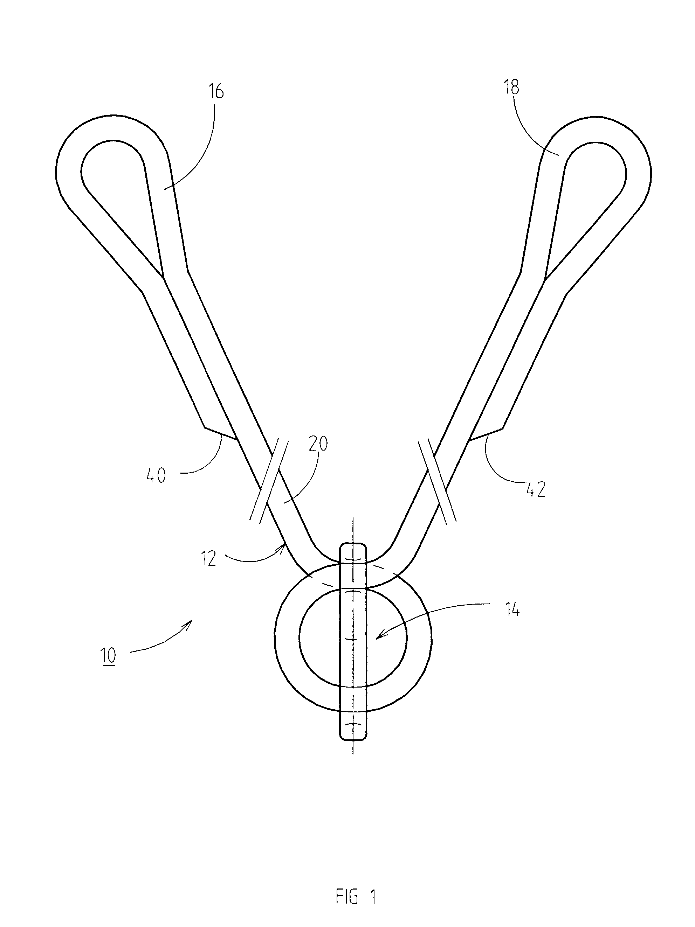

Sur la figure 1, une longe d'assurance 10 pour l'escalade ou la spéléologie est constituée par la coopération d'une corde 12 de sécurité de section circulaire, avec un organe d'absorption d'énergie, désigné par le repère général 14.

Chaque extrémité de la corde 12 de sécurité comporte une boucle 16, 18 d'attache disposée dans le prolongement d'un brin de corde intermédiaire 20,22 relié à l'organe d'absorption d'énergie 14. En fonction du mode d'utilisation du dispositif d'assurance 10, l'organe d'absorption d'énergie 14 peut être attaché au harnais de l'utilisateur, ou à un élément d'amarrage fixe. Les boucles d'attache 16, 18 sont reliées alternativement à une plaquette d'accrochage, ou à une main courante, formée par exemple par un câble solidarisé au rocher.

Seul l'un des brins intermédiaires 20,22 est actif, pendant que l'autre reste inactif. Lorsque la boucle d'attache 16 est fixée à la plaquette d'accrochage ou la main courante, le brin de corde 20 est actif alors que la boucle d'attache 18 tombe librement par gravité vers le bas. Réciproquement, le brin de corde 22 se trouve dans l'état actif lorsque la boucle d'attache 18 est solidarisée à la plaquette d'accrochage ou à la main courante, et que l'autre boucle d'attache 16 est libre.

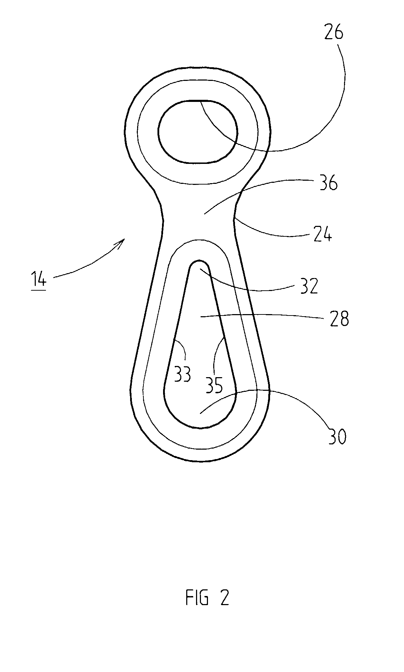

En référence aux figures 2 à 4, l'organe d'absorption d'énergie 14 comprend un corps 24 métallique, équipé de deux orifices 26, 28 de passage de la corde 12. Le premier orifice 26 présente une forme sensiblement ellipsoidale, autorisant le croisement des deux brins de corde 20, 22. La distance la plus courte mesurée verticalement entre les deux côtés parallèles de l'ellipse, est légèrement supérieure au diamètre de la corde 12.

Le deuxième orifice 28 comporte une configuration en V renversé, à section dégressive en direction du premier orifice 26. La dimension de la portion élargie 30 de l'orifice 28 est nettement supérieure au diamètre de la corde 12, tandis que la portion rétrécie 32 présente une forme de coin, ayant une dimension inférieure de moitié au diamètre de la corde 12 de sécurité.

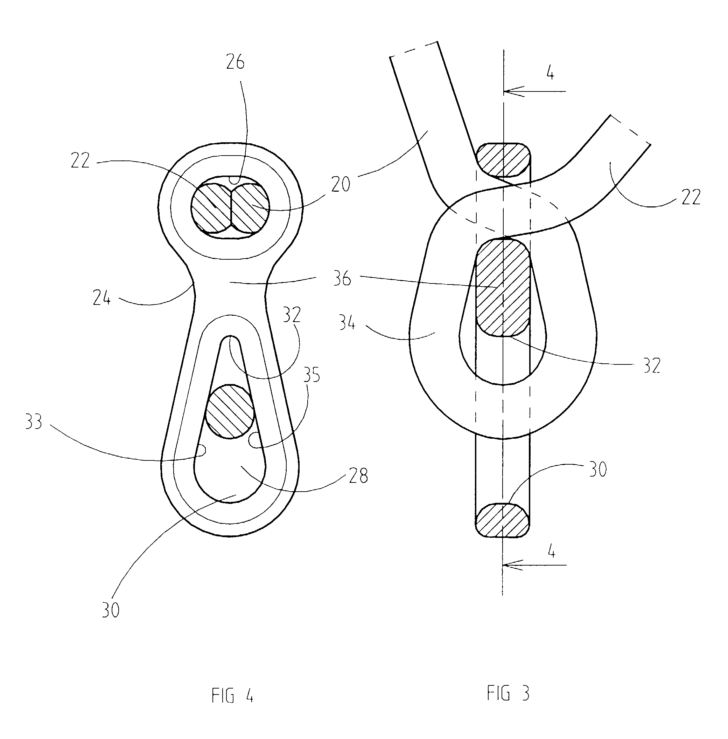

L'écartement entre les arêtes obliques convergentes 33, 35 au niveau de la partie intermédiaire du deuxième orifice 28 correspond sensiblement au diamètre de la corde de sécurité 12 ( voir figure 4).

La corde 12 est conformée selon une spire fermée 34 (figure 3) lors de sa mise en place à travers les orifices 26, 28 de l'organe d'absorption d'énergie 14. Les deux orifices 26, 28 sont séparés l'un de l'autre par une entretoise 36 située dans la partie centrale du corps 24.

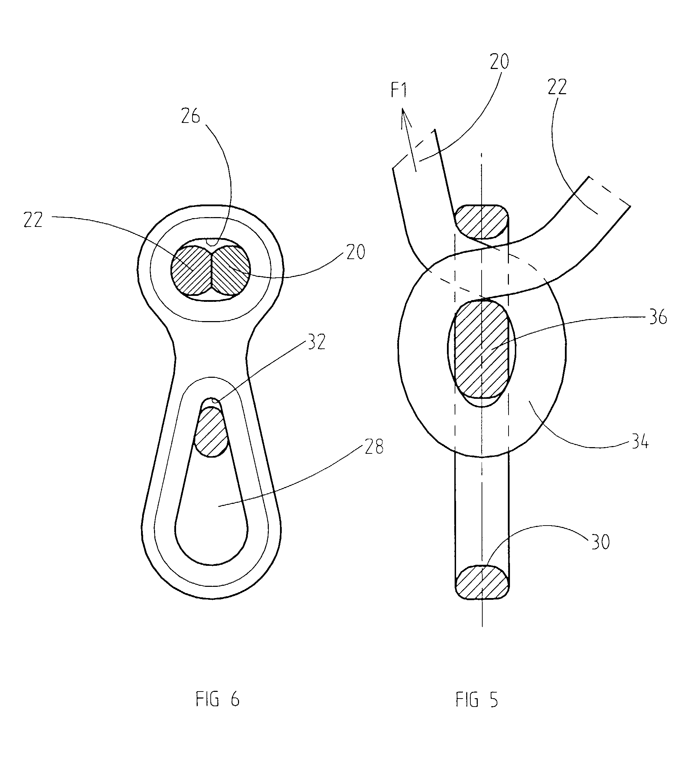

Sur les figures 5 et 6, une mise sous tension modérée ( flèche F1) du brin de corde 20 actif provoque le resserage progressif de la spire 34, et l'engagement de la corde dans la partie rétrécie 32 au fond du V du deuxième orifice 28. Dans cette position, le coincement de la corde 12 dans l'organe d'absorption d'énergie 14 engendre un effort de retenue par l'effet de friction de la corde dans les orifices 26, 28.

Il en résulte un effort de freinage qui intervient jusqu'à un seuil d'effort prédéterminé, de manière à stopper la chute ou le mouvement de progression de l'utilisateur, sans créer des contraintes trop importantes pour l'ensemble de la chaîne d'assurance constituée par la corde, la plaquette d'amarrage et le harnais.

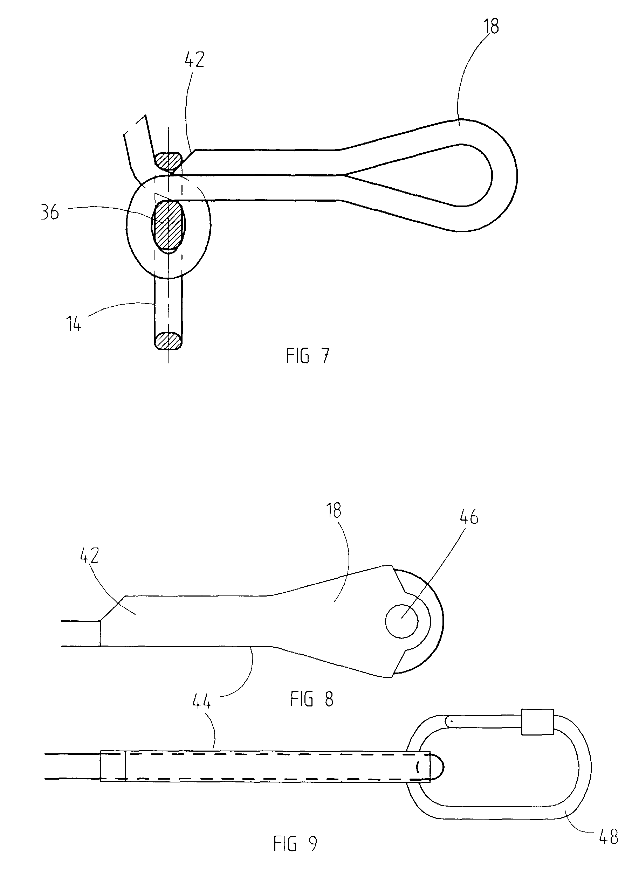

Dans le cas d'une mise sous tension brusque du brin de corde 20 actif, par exemple lors d'une chute sur une grande hauteur, la corde de sécurité glisse dans l'organe d'absorption d'énergie 14, mais en exerçant toujours un effort de freinage pour absorber une partie de l'énergie de chute. Lorsque la boucle 18 du brin de corde 22 non actif vient en engagement en fin de course contre le corps 24 au niveau du premier orifice 26, et avant l'arrêt définitif de la chute, l'énergie restante est absorbée par l'élasticité de la corde 12 ( figure 7).

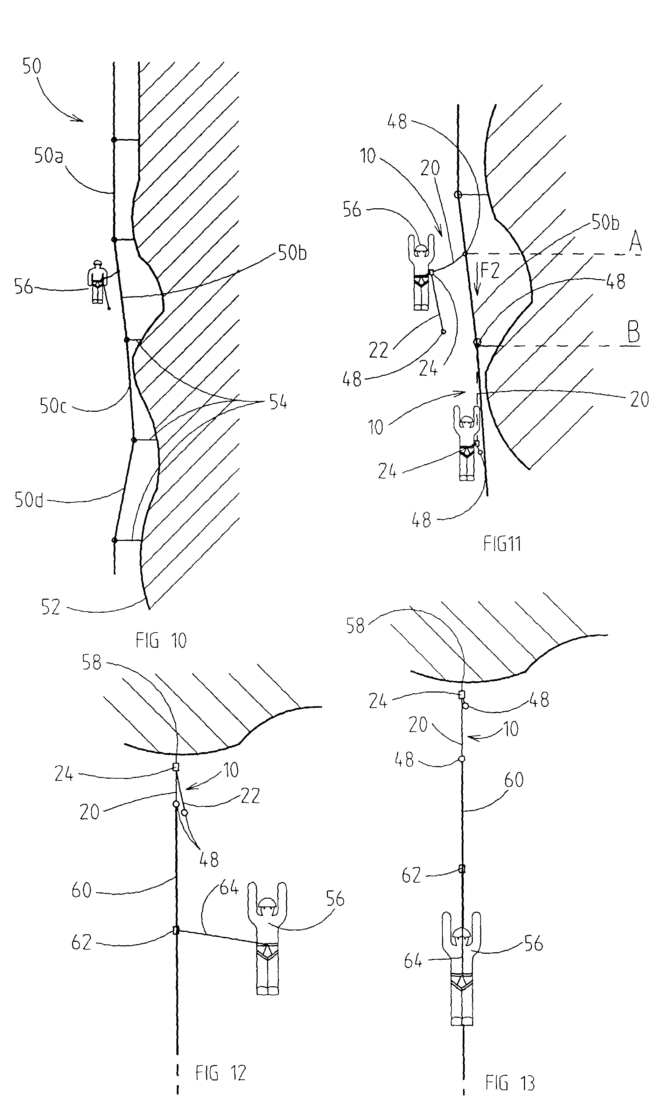

Chaque boucle d'attache 16, 18 est avantageusement pourvue de moyens de butées 40,42 en forme de rampes permettant d'éviter l'usure dans le cas de boucles cousues. Ces rampes peuvent être agencées directement à l'extrémité de chaque boucle 16, 18 ( figures 1 et 7), ou être disposées sur un manchon de protection 44 ( figures 8 et 9), lequel est rapporté sur la boucle d'attache.

Le manchon 44 comporte un trou 46 circulaire à l'opposé de la rampe 42 pour autoriser le passage d'un mousqueton 48 à l'intérieur de la boucle d'attache. La présence du manchon 44 protège chaque boucle d'attache 16, 18 et sert en même temps au maintien sans jeu du mousqueton.

Les figures 10 et 11 montrent une première utilisation de la longe d'assurance 10 sur une main courante 50, laquelle est formée par plusieurs tronçons de câbles 50a, 50b, 50c, 50d, fixés au rocher 52 par des étriers de fixation 54. Le corps 24 de l'organe d'absorption d'énergie 14 est attaché au baudrier du grimpeur 56, et le mousqueton 48 du brin 20 actif passe dans le tronçon de câble 50b. L'autre brin 22 de la corde 12 d'assurance est inactif et pend vers le bas par gravité. En cas de chute du grimpeur 56, le mousqueton 48 descend du niveau A dans le sens de la flèche F2, et est arrêté par l'étrier de fixation 54 au niveau B.

Le brin de corde 20 se rallonge suite au glissement de la corde 12 dans les orifices 26, 28 de l'organe d'absorption d'énergie 14 (fig 11 en pointillé). L'effet de glissement prend fin lorsque la rampe 42 du brin 22 inactif vient en butée contre le corps 24.

Sur les figures 12 et 13, le corps 24 de la longe d'assurance 10 est accroché à un point d'amarrage 58 amont, et le brin de corde 20 est attaché à une corde 60. La sécurité du grimpeur 56 est assurée au moyen d'un bloqueur 62 coopérant avec la corde de rappel 60, et connecté au baudrier par une cordelette 64 de liaison. L'autre brin de corde 22 est libre et inactif. En cas de chute du grimpeur 56 (fig 13), une fraction de l'énergie est d'abord encaissée par la longe d'assurance 10, puis par l'élasticité de la corde de rappel 60.

## Revendications

1. Organe d'absorption d'énergie associé à une longe (10) à corde (12) d'assurance de section cylindrique, et comprenant un corps (24) équipé de moyens de passage de la corde pour engendrer un effort de retenue dû à la friction de la corde lors de son glissement sur le corps (24),
caractérisé en ce que les moyens de passage de la corde (12) comportent un premier orifice (26) autorisant le croisement sans jeu de deux brins de corde (20,22), et un deuxième orifice (28) conformé selon un V renversé à section dégressive en direction du premier orifice (26), ledit second orifice (28) ayant une portion rétrécie (32) de dimension inférieure au diamètre de la corde (12), et deux arêtes (33,35) convergentes de centrage de la corde lors du resserage de la spire (34) pendant ledit glissement.

2. Organe d'absorption d'énergie selon la revendication 1, caractérisé en ce que le premier orifice (26) présente une configuration sensiblement ellipsoïdale.

3. Organe d'absorption d'énergie selon la revendication 1 ou 2, caractérisé en ce que la distance la plus grande du premier orifice (26) correspond sensiblement au double du diamètre de la corde (12).

4. Organe d'absorption d'énergie selon la revendication 3, caractérisé en ce que la distance la plus grande du premier orifice (26) s'étend orthogonalement par rapport à la profondeur du V du deuxième orifice (28).

5. Organe d'absorption d'énergie selon l'une des revendications 1 à 4, caractérisé en ce que l'axe médian de symétrie du corps (12) passe par le fond du deuxième orifice (28), et par le centre du premier orifice (26).

6. Organe d'absorption d'énergie selon l'une des revendications 1 à 5, dans lequel chaque extrémité de la corde (12) d'assurance est dotée d'une boucle d'attache (16,18), reliée au corps (24) par un brin de corde (20,22) intermédiaire, caractérisé en ce que chaque boucle d'attache (16,18) comporte des moyens de butées (40,42) venant en engagement contre le corps (24) en fin de course de glissement de la corde (12).

7. Organe d'absorption d'énergie selon la revendication 6, caractérisé en ce que les moyens de butées (40,42) sont conformés selon des rampes coopérant avec le corps (24) au niveau du premier orifice (26).

8. Organe d'absorption d'énergie selon la revendication 7, caractérisé en ce que les rampes sont situées sur un manchon (44) de protection en matière plastique rapporté sur chaque boucle d'attache (16,18).

9. Organe d'absorption d'énergie selon la revendication 8, caractérisé en ce que le manchon (44) de protection est pourvu d'un trou (46) pour l'accrochage d'un mousqueton (48) à travers la boucle d'attache (16,18).

10. Organe d'absorption d'énergie selon l'une des revendications 1 à 9, caractérisé en ce que le corps (24) est réalisé en matière métallique.

## Patentansprüche

1. Energieaufnehmende Einrichtung, die mit einer Schlinge (10) mit Sicherungsseil (12) mit zylindrischem Querschnitt verbunden ist und einen Körper (24) umfasst, der mit Vorrichtungen zum Durchführen des Seils versehen ist, um eine Rückhaltekraft durch die Reibung des Seils bei seinem Gleiten auf den Körper (24) zu erzeugen,
dadurch gekennzeichnet, dass die Vorrichtungen zum Durchführen des Seils (12) eine erste Öffnung (26) umfassen, die das Überkreuzen zweier Seilstücke (20, 22) ohne Spiel erlaubt, sowie eine zweite Öffnung (28) in Form eines umgedrehten V mit in Richtung auf die erste Öffnung (26) abnehmendem Querschnitt, welche zweite Öffnung (28) einen engeren Bereich (32) mit Abmessungen aufweist, die kleiner sind als der Durchmesser des Seils (12), sowie zwei aufeinander zulaufende Kanten (33, 35) zum Zentrieren des Seils beim Anziehen der Windung (34) während des Gleitens.

2. Energieaufnehmende Einrichtung nach Anspruch 1, dadurch gekennzeichnet, dass die erste Öffnung (26) eine im wesentlichen elliptische Ausgestaltung hat.

3. Energieaufnehmende Einrichtung nach Anspruch 1 oder 2, dadurch gekennzeichnet, dass der größte Abstand der ersten Öffnung (26) im wesentlichen dem doppelten Durchmesser des Seils (12) entspricht.

4. Energieaufnehmende Einrichtung nach Anspruch 3, dadurch gekennzeichnet, dass sich der größte Abstand der ersten Öffnung (26) rechtwinklig zur Tiefe des V der zweiten Öffnung (28) erstreckt.

5. Energieaufnehmende Einrichtung nach einem der Ansprüche 1 bis 4, dadurch gekennzeichnet, dass die mittlere Symmetrieachse des Körpers (24) durch den Boden der zweiten Öffnung (28) und den Mittelpunkt der ersten Öffnung (26) führt.

6. Energieaufnehmende Einrichtung nach einem der Ansprüche 1 bis 5, bei der jedes Ende des Sicherungsseils (12) eine Einhängeschlaufe (16, 18) umfasst, die mit dem Körper durch ein Zwischenseilstück (20, 22) verbunden ist, dadurch gekennzeichnet, dass jede Einhängeschlaufe (16, 18) Anschlagvorrichtungen (40, 42) umfasst, die am Ende des Gleitens des Seils (12) am Körper (24) eingreifen.

7. Energieaufnehmende Einrichtung nach Anspruch 6, dadurch gekennzeichnet, dass die Anschlagvorrichtungen (40, 42) in Form von Schrägen vorgesehen sind, die mit dem Körper (24) in Höhe der ersten Öffnung (26) zusammenwirken.

8. Energieaufnehmende Einrichtung nach Anspruch 7, dadurch gekennzeichnet, dass die Schrägen sich an einer Schutzhülse (44) aus Kunststoff befinden, die auf jede Einhängeschlaufe (16, 18) aufgebracht ist.

9. Energieaufnehmende Einrichtung nach Anspruch 8, dadurch gekennzeichnet, dass die Schutzhülse (44) mit einer Öffnung (46) zum Einhängen eines Karabiners (48) durch die Einhängeschlaufe (16, 18) hindurch versehen ist.

10. Energieaufnehmende Einrichtung nach einem der Ansprüche 1 bis 9, dadurch gekennzeichnet, dass der Körper (24) aus Metall besteht.

## Claims

1. An energy absorbing device associated to a lanyard (10) with a safety rope (12) of cylindrical cross-section, and comprising a body (24) equipped with means for passing the rope to generate a securing force due to the friction of the rope when the latter slides on the body (24),
characterized in that the means for passing the rope (12) comprise a first orifice (26) allowing two strands of rope (20, 22) to cross without clearance, and a second reverse V-shaped orifice (28) of decreasing cross-section in the direction of the first orifice (26), said second orifice (28) having a portion of reduced width (32) of a smaller dimension than the diameter of the rope (12), and two convergent edges (33, 35) for centering the rope when the turn (34) is tightened during said sliding.

2. The energy absorbing device according to claim 1, characterized in that the first orifice (26) presents an appreciably ellipsoidal configuration.

3. The energy absorbing device according to claim 1 or 2, characterized in that the greatest distance of the first orifice (26) corresponds appreciably to twice the diameter of the rope (12).

4. The energy absorbing device according to claim 3, characterized in that the greatest distance of the first orifice (26) extends orthogonally with respect to the depth of the V of the second orifice (28).

5. The energy absorbing device according to one of the claims 1 to 4, characterized in that the mid-axis of symmetry of the body (12) passes through the bottom of the second orifice (28), and through the centre of the first orifice (26).

6. The energy absorbing device according to one of the claims 1 to 5, wherein each end of the safety rope (12) is provided with an attachment loop (16, 18) joined to the body (24) by an intermediate rope strand (20, 22), characterized in that each attachment loop (16, 18) comprises stop means (40, 42) coming into engagement against the body (24) at the end of sliding travel of the rope (12).

7. The energy absorbing device according to claim 6, characterized in that the stop means (40, 42) are shaped as ramps cooperating with the body (24) at the level of the first orifice (26).

8. The energy absorbing device according to claim 7, characterized in that the ramps are situated on a protective sleeve (44) made of plastic material fitted onto each attachment loop (16, 18).

9. The energy absorbing device according to claim 8, characterized in that the protective sleeve (44) is provided with a hole (46) for attaching a snap-hook (48) through the attachment loop (16, 18).

10. The energy absorbing device according to one of the claims 1 to 9, characterized in that the body (24) is made of metallic material.
